# EUROPEAN PATENT APPLICATION

(11) **EP 0 659 466 A1**
(43) Date of publication of application: **28.06.1995**
(21) Application number: 94203575.9
(22) Date of filing: 08.12.1994
(51) Int. Cl.: B01D 61/44, C23G 1/36

(54) **Process for the purification of acid solutions**

(30) Priority: 24.12.1993 NL 9302261
(71) Applicant: Elektrolyse Project B.V., 1405 GX Bussum (NL)
(72) Inventor: Tholen, Johannes Petrus Paulus, NL-1405 CS Bussum (NL)
(74) Representative: De Hoop, Eric

(57) **Abstract**

This invention relates to a method according to which contaminated acid solutions or chromate solutions can be separated into very pure acid and a concentrated solution with the contaminations or otherwise an alkaline solution. For that purpose the solution to be purified is fed to the middle compartment of an electrolytic cell consisting of three compartments, which are separated from each other by permeable material. Between the middle and the anode compartment there is a material which is in any case permeable for anions.

## Description

The present invention relates to a method for purifying an acid solution, wherein the latter is fed to an electrolytic cell which consists of three adjacent compartments, to wit a cathode, a middle and an anode compartment, wherein the outer compartments contain a cathode and an anode respectively, wherein the separating walls between the compartments consist entirely or partially of permeable material, wherein a direct voltage is applied over the cell with the help of the anode and the cathode and wherein there is an electrolyt in the electrode compartments.

Methods for purifying contaminated acid solutions are known per se. The contaminations consist here of foreign cations, mostly metals. When etching metal objects, solutions of a strong acid are used, in which the objects dissolve slightly. Also when plating (for example electrolytic chromic-plating) a part of the metal to be treated dissolves.

The British 1.411.293 thus describes the removal of metal ions from an aqueous acid solution. Use is made of an anion selective and a cation selective membrane for removing the positive metal ions from the solution. According to one embodiment in said patent specification (figure 4) a chromic acid solution is fed to an anode chamber, which chamber is separated by means of a cation selective membrane from a middle compartment. This middle compartment contains a copper solution, which is a part of a coppering apparatus. This compartment is separated from the cathode chamber by means of an anion selective membrane, where there is an acid solution as catholyte. Object of this apparatus is to keep cations out of this cathode chamber, to thus prevent deposit thereof on the cathode, whilst the anions are kept in the anode chamber.

The contaminations, i.e. the cations, are carried to the middle compartment. Another embodiment of the method presented in that document (figure 6) is a three-compartment system with two cation selective membranes. An etching solution consisting of zinc nitrate and nitric acid is fed to the middle compartment of an electrolytic cell consisting of three compartments, which compartment is separated from an anode and a cathode chamber by means of two cation selective membranes. In this apparatus the cations are removed from the fed etching solution. The purified nitric acid remains in the circuit with the still contaminated etching solution. The acid solution in the anode chamber is for making the catholyte electrically conducting. The principle is, in effect, based on a two-compartment cell, because the third compartment does not directly contribute to the purification, but merely serves to ensure that the anode remains separated from the purified etching solution.

A two-compartment method is described in US 4.006.067, which is used for reprocessing contaminated chromic acid solutions. The contaminated chromic acid solution is fed to the anode chamber. The foreign cations are carried via the cation selective membrane to the cathode chamber. The catholyte solution which is used here is a diluted solution of sulphuric acid.

A disadvantage of the methods named above is that when the anionic acid radical is kept in the compartment to which it is fed, the metal cation content reaches a minimum level, which can never be reduced. It has appeared that the iron content in a used chromic acid solution cannot be reduced further than 8 g/l with a method like that.

The present invention now provides a method as named in the precharacterizing part, which offers a number of advantages compared to the methods as named above. The present invention is, as a matter of fact, characterized in that the acid solution to be purified and possibly reprocessed is fed to the middle compartment and the permeable material between the middle and the anode compartment is a material which is in any case permeable for anions.

All materials known as such in technical science can be used as permeable separating walls. A diaphragm or an anion selective material can be used between the middle compartment and the anode chamber, because they can let anions through. The separating wall between the middle compartment and the cathode compartment should, however, contain a material which is permeable for cations. A cation selective material or a diaphragm is therefore preferred here. The general disadvantage of a diaphragm is that it cannot counteract the diffusion of anions or cations, whereas cation selective and anion selective membranes can do.

With the method according to the invention it has surprisingly been shown that the quantity of iron in the acid solution to be purified can be brought to a level lower than 8 g/l, when the acid radical anions are removed from the middle compartment. By also ensuring that the concentration of the metal ions in the cathode chamber does not get too high, no metal will be deposited on the cathode.

It appears from the said literature that various acid solutions can be purified with an electrolytic cell. As etching solutions those are, for example, nitric acid, chromic acid, sulphuric acid and other strong acids. The metal objects to be treated dissolve somewhat in there, so that the contaminated cations can be of every sort.

If a contaminated chromic acid solution is purified, pure chromic acid is formed in the anode chamber, without there being foreign metal ions in it, which solution can, in the anode chamber, initially consist of water but can also suitably consist of an electrolyte such as diluted chromic acid or another strong acid. The [Cr0₄]²- and the [Cr₂0_{4]}²⁻ from the contaminated chromic acid is attracted by the anode and let through by the permeable material. On the anode Cr³⁺ is oxidized to Cr⁶⁺ which is present in the solution as [Cr₂0₄]²⁻ or otherwise [Cr0₄]²⁻. With the H⁺ -ions formed by the water fission chromic acid is then formed. This purification can be carried out well in accordance with the method of the present invention. The present anion selective membranes are not, however, resistant to chromic acid. Therefore a diaphragm is preferable. The foreign cations are attracted by the cathode and move through the permeable material to the cathode chamber. Here a durable cation selective membrane is preferably used. In origin this cathode chamber preferably contains a diluted solution of a strong acid, for example sulphuric acid or chromic acid, although water can also be used. With acid solutions, however, metal salts which keep well in solution, are formed in the cathode chamber. Henceforth the purifying of chromic acid solutions will mainly be referred to, without it being the intention to limit the invention to that. Other acid solutions, too, can be purified by the present method.

In a special method according to the invention it is ensured that the liquid to be treated, which is fed to the middle compartment, contains a high chrome content in the case of a chromic acid solution, to thus guarantee a good transport to the anode chamber. In case the chrome content should get too low, reverse transport of [Cr0₄]²⁻ by diffusion and of H⁺ in the electrical field would take place. For that purpose an evaporator has to be incorporated into the circuit of this liquid, preferably a simple absorber, through which warm, dry air is led. The cell to be used has to be provided with very thin compartments (just a few mm's thick) so that it is possible to evaporate small quantities still further whilst maintaining sufficient flow. If the volume of liquid to be treated is too small or the foreign metal content, for example iron, has increased greatly, the rest together with the catholyte is disposed of.

It is also possible that the iron carries relatively less than the chromic acid. In that case the iron content in the middle compartment will increase, there being a chance that ferrochromic crystals occur. By now letting the liquid recirculate via a separate tank, from which the crystals are removed (precipitation or filtration), the liquid which is led through the middle compartment is kept free of crystals. The metal salt solution developed in the cathode chamber can be processed by a simple water purification (ONO-installation).

The formation of pure chromic acid goes quickly and has a high return, whilst the formed chromic acid is entirely pure.

Surprisingly it has also been found that solutions which come from the regeneration of ion exchangers can be purified in a very suitable manner by the method according to the present invention. These solutions consist, for example, mainly of sodium chromate and/or potassium chromate. At the beginning a diluted alkaline solution must be used as catholyte, more alkaline being formed during operation. Water or a diluted solution of a strong acid can be used as anolyte when purifying a similar solution, such as described above in the purification of acid. During operation (more) chromic acid will be formed.

Naturally, this does not only apply to chromate solutions but also to other salt solutions of a metal with an acid radical of a strong acid.

When purifying chromate solutions in which chromic acid is formed in the anode compartment, or other solutions which give a strong acid, just as described above, a diaphragm must be used between the middle and the anode compartment, because the present anion selective membranes are not resistant to an acid of that kind. The permeable material between the middle and the cathode compartment should here, too, be a material which is in any case permeable for cations.

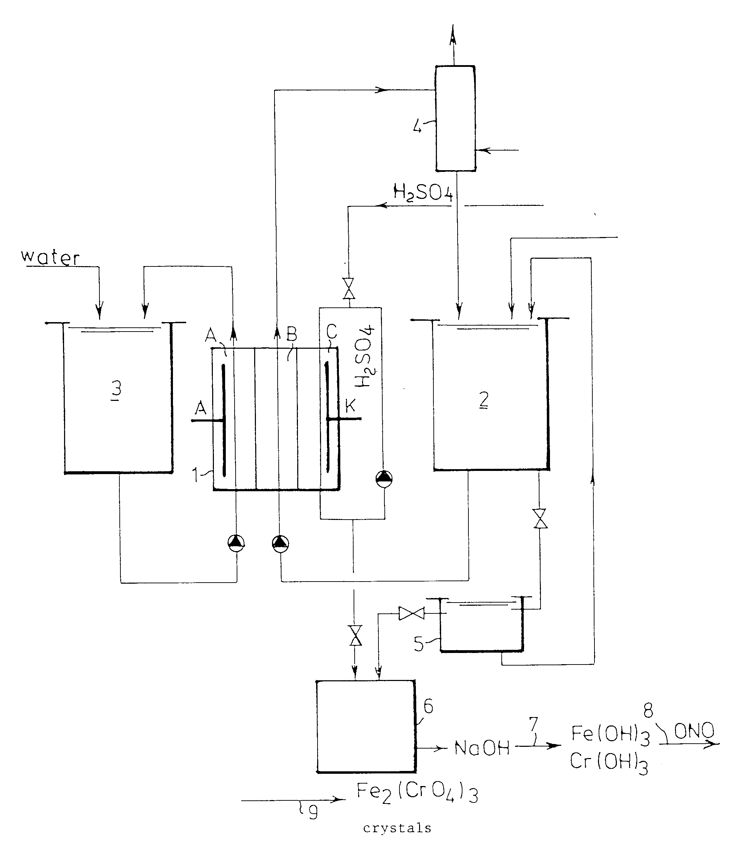

### Description of figure 1

In the accompanying figure 1 an apparatus is shown which can be used in the present invention.

In an electrolytic cell 1, which consists of three compartments A, B and C, of which compartment A contains an anode and compartment C a cathode, the acid solution to be purified is fed to middle compartment B. A direct voltage is applied over the electrodes. A catholyte solution, which preferably consists of a diluted solution of a strong acid, is circulated via an external circuit through the cathode chamber C. An anolyte solution, which can originally consist of, for example, water or a diluted solution of the acid to be purified, is pumped through anode chamber A via an external circuit though a tank 3. The solution to be purified is in holding tank 2. It is pumped to the middle compartment B where a separation of the ions takes place. Through this a reduction of the concentration takes place. In order to keep the concentration of the solution to be purified sufficiently high, the solution is led after B to an evaporator 4. With the help of dry air a part of the solution evaporates. Then the solution is led back to the tank 2. Distinct from this a separate circuit can be arranged for removing crystals which may have formed. The solution is led back to tank 2 from a separator 5, whilst the crystals are collected in a tank 6, possibly together with a solution containing the contaminations, from the circuit of C. In the apparatus 7 this mixture is reduced with NaOH, as a result of which iron hydroxide and chrome hydroxide are obtained. This can be fed to an ONO apparatus 8. If so desired the mixture obtained in the tank 6 can be cooled to ± 20° in 9, as a result of which ferro chromate crystals are obtained.

### Example

Using an apparatus such as is shown in figure 1, and which conforms to the present invention as is shown in the accompanying claims, a contaminated chromic acid solution is reprocessed.

A contaminated chromic acid solution of 1000 l, which contains 12 g/l Fe₂Cr0₄ and 200 g/l [Cr0₄]²⁻ is brought into a tank (2) to be purified. The temperature of the solution is 45°C. The solution is fed to the middle compartment (B) of an electrolytic cell (1), which also includes an anode compartment (A) and a cathode compartment (C).

The anode compartment (A) contains an anode, and is part of a circuit, which further consists of a tank (3), in which, at the onset, there is water (1000 l). This is circulated continuously. The cathode compartment (C) contains a cathode and is also part of a separate circuit, in which there is a 0.01 mol/l sulphuric acid solution. This solution is circulated continuously. In this method a certain volume flow of new sulphuric acid can be fed continuously and a same quantity discharged, or a certain quantity can be circulated until the contamination rises to a maximum after which the whole quantity is removed and new sulphuric acid is fed. Apart from the tank (2) and the middle compartment (B) the circuit of the acid solution to be purified also contains an evaporator (4) through which warm air is fed. While operating of this apparatus the quantity of ions in the acid solution to be purified decreases. In order to keep the concentration sufficiently high a part of the liquid is removed from the evaporator, until an ultimate concentration of 400 g/l [Cr₂0₄]²⁻ in a quantity of liquid of 100 l is reached.

At that moment the concentration of chromic acid in the tank (3) is 220 g/l.

Because of the concentration increase ferro chromate crystals can form in the circuit which contains the acid solution. For that purpose the tank (2) is provided with an extra discharge which leads to a separator (5). There the crystals are separated from the solution. The solution returns to the tank (2) and the crystals are mixed with the sulphuric acid solution which comes from the circuit through (C) in (6). By treating this mixture with NaOH in an apparatus (7) a reduction of the salt solution takes place, as a result of which the mixture thus obtained is suited for feeding to an ONO installation (8). Cooling to ± 20° of the mixture obtained in (6) produces ferro (III) chromate crystals.

The ultimate current efficiency is 50%, based on chromic acid. The ultimate metal content is lower than 1 g/l.

## Claims

1. Method for purifying an acid solution, wherein the latter is fed to an electrolytic cell which consists of three adjacent compartments, to wit a cathode, a middle and an anode compartment, wherein the outer compartments contain a cathode and an anode respectively, wherein the separating walls between the compartments consist entirely or partially of permeable material, wherein a direct voltage is applied over the cell with the help of the anode and the cathode, **characterized in that** the acid solution is fed to the middle compartment and the permeable material between the middle and the anode compartment is a material which is in any case permeable for anions.

2. Method according to claim 1, **characterized in that** there is a diaphragm between the middle and the anode compartment and a cation selective membrane between the middle and the cathode compartment.

3. Method according to claim 1, **characterized in that** the acid solution is a chromic acid solution.

4. Method according to any one of the claims 1-3, **charac****terised in that** the electrolytes in the outer compartments consist of a diluted solution of a strong acid.

5. Method according to claim 1, **characterized in that** the acid solution is in a circuit which further comprises a holding tank and an evaporator, through which the liquid is circulated.

6. Method for purifying a chromate solution, in which the latter is fed to an electrolytic cell as described in claim 1, **characterized in that** the chromate solution is fed to the middle compartment and the permable material between the middle and the anode compartment which is a material which is in any case permeable for anions.

7. Method according to claim 6, **characterized in that** there is a diaphragm between the middle and the anode compartment and a cation selective membrane between the middle and the cathode compartment.

8. Method according to claim 6, **characterized in that** the chromate solution is a sodium and/or potassium chromate solution which results from the regeneration of an ion exchanger.

9. Method according to any one of the claims 6-8, **charac****terized in that** as initial solution in the anode compartment a diluted strong acid and in the cathode compartment a diluted alkaline solution is used.

10. Method according to claim 6, **characterized in that** the chromate solution is in a circuit, which further comprises a storage tank and an evaporator, through which the liquid is circulated.
